# EUROPÄISCHE PATENTSCHRIFT

(11) **EP 3 683 124 B1**
(45) Veröffentlichungstag und Bekanntmachung des Hinweises auf die Patenterteilung: **09.08.2023**
(21) Anmeldenummer: 20150841.3
(22) Anmeldetag: 09.01.2020
(51) Int. Cl.: B62D 33/04, B62D 29/04

(54) **ISOLIERPANEEL, KOMPONENTE EINES FAHRZEUGAUFBAUS, FAHRZEUGAUFBAU, FAHRZEUG UND HERSTELLUNGSVERFAHREN**
INSULATING PANEL, COMPONENT OF VEHICLE BODY, VEHICLE BODY, VEHICLE AND PRODUCTION METHOD
PANNEAU ISOLANT, COMPOSANT D'UNE CARROSSERIE DE VÉHICULE, CARROSSERIE DE VÉHICULE, VÉHICULE ET PROCÉDÉ DE FABRICATION

(30) Priorität: 16.01.2019 DE 102019101029
(43) Veröffentlichungstag der Anmeldung: 22.07.2020
(73) Patentinhaber: Kögel Trailer GmbH, 89349 Burtenbach (DE)
(72) Erfinder: PRÖBSTLE, Roman, 89359 Kötz (DE); RULEWSKI, Marcel, 86637 Zusamaltheim (DE); GRINBOLD, Matthias, 74541 Vellberg (DE); BIRLE, Günter, 86877 Walkertshofen (DE)
(74) Vertreter: Meissner Bolte Partnerschaft mbB

(56) Entgegenhaltungen:
- WO-A1-99/50060
- DE-A1- 10 029 355
- DE-A1- 10 109 709
- DE-A1- 10 121 012
- DE-A1-102013 105 819
- JP-A- 2005 180 849
- KR-B1- 100 820 313

## Beschreibung

Die Erfindung betrifft ein Isolierpaneel, eine Komponente eines Fahrzeugaufbaus, einen Fahrzeugaufbau, ein Fahrzeug und ein Verfahren zur Herstellung eines Isolierpaneels. Ein Isolierpaneel gemäß dem Oberbegriff des Patentanspruchs 1 ist beispielsweise aus der WO 99/50060 A1 bekannt.

Für den Transport von verderblichen Lebensmitteln, die tiefgekühlt in der Kette von Erzeuger, Verarbeiter und Verkäufer transportiert werden müssen, wie auch für den Transport von kälteempfindlichen Waren, sind isolierte Kofferaufbauten bekannt. Solche Kofferaufbauten umfassen oftmals Isolierpaneele mit Deckschichten aus faserverstärkten Kunststoffmaterialien, die insbesondere auch im Dachbereich zum Einsatz kommen. Derartige Isolierpaneele sind bspw. aus der eingangs genannten WO 99/50060 A1 bekannt, die auf die Anmelderin zurückgeht.

Generell weisen solche Kofferaufbauten eine Kühlmaschine auf, die gekühlte Luft aus einer Austrittöffnung ins Innere des Aufbaus bläst. Dabei kommt es darauf an, dass ein möglichst gleichmäßiges Temperaturprofil über die gesamte Aufbaulänge und -breite eingestellt werden kann. Dazu wird die Kühlluft entweder in einzelne Luftschläuche bzw. Kanäle oder auf ein unter die Decke des Aufbaus gespanntes Tuch geblasen, wodurch eine möglichst gleichmäßige Verteilung der Kühlluft im Laderaum erreicht wird.

Aus der DE 100 29 355 A1, die auf die Anmelderin zurückgeht, ist beispielsweise ein isolierter Kofferaufbau bekannt, in dessen Vorderwand ein Kühlaggregat integriert ist. Das Kühlaggregat saugt Luft aus dem Laderaum an, kühlt diese ab und bläst dann die gekühlte Luft in Deckennähe auf ein unter die Decke gespanntes Tuch bzw. Segel. Damit wird vermieden, dass die kalte Luft in der Nähe des Kühlaggregats, d. h. im vorderen Bereich des Aufbaus nach unten sinkt und eine ausreichende Menge an Kühlluft in den hinteren Bereich des Aufbaus gelangt. Durch das unter die Decke des Aufbaus gespannte Segel wird die Luft zum hinteren Ende des Aufbaus, sowie zu den Seiten hin abgelenkt bzw. geführt. Die an den Seitenwänden bzw. der Rückwand des Aufbaus nach unten sinkende Luft strömt in Bodennähe zur Vorderwand zurück und wird dort vom Kühlaggregat angesaugt. Dadurch entsteht ein Kühlluftkreislauf, der zu einer verbesserten Temperaturverteilung im Laderaum führt.

Hierbei ist nachteilig, dass der Laderaum nach oben hin bzw. zur Decke hin nur begrenzt ausnutzbar ist. Die Kühlluft wird zwischen dem Segel und der Deckenfläche durch den Laderaum des Kofferaufbaus geführt. Das Ladegut bzw. etwaige Etagenbalken können daher nicht bis an die Deckenfläche platziert werden. Ein Anlegen des Tuchs bzw. des Segels an der Deckenfläche würde den Kühlluftkreislauf und somit die Kühlung des Ladeguts unterbrechen.

Der Erfindung liegt daher die Aufgabe zu Grunde, ein Isolierpaneel für einen Fahrzeugaufbau, insbesondere einen Kühlfahrzeugaufbau, bereitzustellen, durch das ein Laderaum des Fahrzeugaufbaus verbessert ausnutzbar ist. Der Erfindung liegt ferner die Aufgabe zu Grunde, eine Komponente eines Fahrzeugaufbaus, einen Fahrzeugaufbau, ein Fahrzeug und ein Herstellungsverfahren für Isolierpaneele bereitzustellen.

Erfindungsgemäß wird diese Aufgabe im Hinblick auf das Isolierpaneel durch den Gegenstand des Anspruchs 1 gelöst. Hinsichtlich der Komponente eines Fahrzeugaufbaus, des Fahrzeugaufbaus, des Fahrzeugs und des Verfahrens zur Herstellung eines Isolierpaneels wird die vorstehend genannte Aufgabe jeweils durch den Gegenstand des Anspruchs 11 (Komponente), des Anspruchs 12 (Fahrzeugaufbau), des Anspruchs 14 (Fahrzeug) und des Anspruchs 15 (Verfahren) gelöst.

Konkret wird die Aufgabe durch ein Isolierpaneel für einen Fahrzeugaufbau, insbesondere einen Kühlfahrzeugaufbau, mit wenigstens einer wärmedämmenden Kernschicht und wenigstens einer Deckschicht aus faserverstärktem Kunststoffmaterial gelöst. Die Kernschicht weist auf einer Innenseite wenigstens eine Ausnehmung aufweist, die sich in Längsrichtung des Isolierpaneels erstreckt und durch ein Führungsmittel nach außen hin zumindest teilweise begrenzt ist. Die Ausnehmung und das Führungsmittel bilden einen Luftkanal zur Luftführung in einem Laderaum.

Die Erfindung hat verschiedene Vorteile. Durch die Ausbildung der Deckschichten aus faserverstärktem Kunststoffmaterial weist das Isolierpaneel im Unterschied zu herkömmlichen Isolierpaneelen mit metallischen Deckschichten vorteilhaft ein sehr geringes Gewicht auf. In Einbaulage ist die Innenseite der Kernschicht dem Laderaum eines Fahrzeugaufbaus zugewandt. Im eingebauten Zustand des Isolierpaneels ist durch den Luftkanal vorteilhaft eine Luftzirkulation im Laderaum des Fahrzeugaufbaus herstellbar. Insbesondere bei Kühlfahrzeugaufbauten, die ein Kühlaggregat zur Luftkühlung umfassen, kann durch den Luftkanal ein Kühlluftkreislauf aufgebaut werden, durch den der Laderaum und somit das im Laderaum befindliche Ladegut gekühlt wird. Generell kann das Isolierpaneel mehr als einen Luftkanal zur Luftführung aufweisen.

Durch die Ausnehmung in der Kernschicht des Isolierpaneels ist der Luftkanal vorteilhaft in der Kernschicht versenkt. Der Luftkanal kann in der Kernschicht vollständig versenkt und/oder teilweise versenkt vorgesehen sein. Die Bildung des Luftkanals durch die Ausnehmung und das Führungsmittel hat den Vorteil, dass in Einbaulage ein Ladegut an der Innenseite bzw. einer Innenfläche des Isolierpaneels anliegen kann, ohne den Luftkanal zu blockieren. Bei der Verwendung des Isolierpaneels als Deckenpaneel können dadurch vorteilhaft Etagenbalken bis zum Isolierpaneel die Innenfläche des Isolierpaneels geführt werden. Der Laderaum des Fahrzeugaufbaus ist somit bei Aufrechterhaltung der Luftzirkulation bzw. des Kühlluftkreislaufs verbessert ausnutzbar. Mit anderen Worten kann der Luftstrom durch den Luftkanal bei einer maximalen Beladung bis an das Isolierpaneel heran kontinuierlich aufrechterhalten werden. Somit wird vorteilhaft im Betrieb und beladenen Zustand des Laderaums eine ständige Luftzirkulation im Laderaum bzw. eine ständige Kühlung des Ladeguts erreicht.

Der Luftkanal kann einerseits durch das Führungsmittel und die mit der Deckschicht überzogene Kernschicht begrenzt sein. Alternativ kann der Luftkanal andererseits durch das Führungsmittel und die rohe, insbesondere geschäumte, Kernschicht begrenzt sein. Dabei kann die Ausnehmung frei von einer Deckschicht vorgesehen sein.

Das Führungsmittel kann an der Ausnehmung demontierbar vorgesehen sein. Dies hat den Vorteil, dass eine Reinigung des Luftkanals bzw. der Ausnehmung oder ein Austausch des Führungsmittels schnell und einfach erfolgen kann.

Es versteht sich, dass die Erfindung nicht auf die Führung von gekühlter Luft bzw. die Verwendung eines Kühlaggregates eingeschränkt ist, sondern auch die Führung von erwärmter Luft bzw. die Verwendung eines Heizaggregates umfasst. Das erfindungsgemäße Prinzip kann generell auf Fahrzeugaufbauten angewandt werden, bei denen es auf eine möglichst verlustfreie Förderung von Luft oder Gas im Laderaum ankommt. Beispielsweise kann dies die Förderung von Reifungsgasen oder die Reifung verzögernden Gasen, wie beispielsweise Stickstoff, umfassen. Als Fördermittel kann ein Ventilator eingesetzt werden, wenn eine Klimatisierung der Luft nicht erforderlich ist.

Bevorzugte Ausführungsformen der Erfindung sind in den Unteransprüchen angegeben.

Bei einer besonders bevorzugten Ausführungsform ist die Ausnehmung mit der Deckschicht formfolgend bedeckt, wobei der Luftkanal zwischen der Deckschicht und dem Führungsmittel ausgebildet ist. Mit anderen Worten ist die Deckschicht vorzugsweise an die Form der Ausnehmung angepasst bzw. anliegend aufgebracht. Die Deckschicht kann somit die Ausnehmung formabbildend bedecken. Hierbei ist vorteilhaft, dass das faserverstärkte Kunststoffmaterial der Deckschicht bei der Herstellung des Isolierpaneels ohne definierte Materialaussparungen auf die Kernschicht flächendeckend aufgetragen werden kann. Dadurch wird die Herstellung des Isolierpaneels vereinfacht, wodurch Zeit und Kosten eingespart werden. Zusätzlich ist vorteilhaft, dass der Luftkanal aufgrund der Deckschicht einfach und schnell zu reinigen ist.

Bei einer bevorzugten Ausführungsform ist die Ausnehmung bzw. der Luftkanal annähernd über die gesamte Länge des Isolierpaneels vorgesehen. Dies hat den Vorteil, dass bei einem Kühlfahrzeugaufbau mit einem Kühlaggregat, das herkömmlicherweise im vorderen Bereich des Fahrzeugaufbaus vorgesehen ist, die gekühlte Luft durch den Luftkanal vom vorderen Bereich in den hinteren Bereich des Fahrzeugaufbaus führbar ist. Das Kühlaggregat saugt dazu Luft an, kühlt diese ab und leitet die abgekühlte Luft durch den Luftkanal in den hinteren Bereich des Fahrzeugaufbaus. Im hinteren Bereich sinkt die gekühlte Luft bis auf Bodennähe ab und strömt zum Kühlaggregat zurück. Durch die Zirkulation der gekühlten Luft wird eine optimale Temperaturverteilung im Laderaum erreicht. Generell ist auch denkbar, dass die Ausnehmung bzw. der Luftkanal lediglich über eine Teillänge des Isolierpaneels vorgesehen sind. Bspw. kann das Isolierpaneel wenigstens einen weiteren Luftkanal zur Luftführung im Laderaum aufweisen. Der weitere Luftkanal kann von einem mittleren Bereich des Isolierpaneels ausgehend zum hinteren Bereich und/oder zum vorderen Bereich führen. Dadurch wird ermöglicht, dass von einem im mittleren Bereich angeordneten Zusatzaggregat ausgehend Luft zur Zirkulation in den vorderen und/oder hinteren Bereich des Fahrzeugaufbaus geführt werden kann. Eine gleichmäßige Klimatisierung des Laderaums wird dadurch verbessert. Bei einer weiteren bevorzugten Ausführungsform ist das Führungsmittel aus einem flexiblen Textilmaterial, insbesondere einem Tuch oder einer Plane, gebildet. Hierbei ist vorteilhaft, dass das Ladegut an der Innenseite bzw. der Innenfläche des Isolierpaneels anliegen kann ohne den Luftkanal zu blockieren. Dabei wird das Textilmaterial in Richtung der Ausnehmung gedrückt derart, dass der Luftkanal im Durchgang frei bleibt. Der Laderaum des Fahrzeugaufbaus mit maximaler Beladung unter Aufrechterhaltung des Luftstroms durch den Luftkanal ausnutzbar. Ferner ist das Textilmaterial ist kostengünstig und leicht zu montieren. Ferner weist das Textilmaterial im Vergleich zu starren Führungsmittel, bspw. aus Metall oder Kunststoff, ein geringes Gewicht auf. Vorzugsweise weist das Führungsmittel wenigstens eine Öffnung zur Luftverteilung im Laderaum auf. Es ist denkbar, dass das Führungsmittel mehrere Öffnungen aufweist, durch die Luft entlang der Ausnehmung bzw. des Luftkanals in den Laderaum verteilbar ist. Hierbei ist vorteilhaft, dass eine gleichmäßige Klimatisierung des Laderaums erreicht wird.

Weiter vorzugsweise dichtet das Führungsmittel den Luftkanal quer zur Längsrichtung der Ausnehmung zumindest abschnittsweise fluiddicht ab. Es ist auch denkbar, dass wenigstens ein Spalt zwischen dem Führungsmittel und der Innenseite bzw. der Deckschicht vorgesehen ist, durch den der Luftkanal seitlich nach außen offen ist. Ferner kann das Führungsmittel abschnittsweise oder über die gesamte Länge verteilt Durchgangsöffnungen aufweisen, durch die der Luftkanal nach außen hin offen ist. Unter "nach außen hin" ist zu verstehen, dass der Luftkanal in Einbaulage des Isolierpaneels zum Laderaum hin offen ist. Dabei ist vorteilhaft, dass bei einer Klimatisierung eines Laderaums die Luft auch entlang des Luftkanals seitlich an beispielsweise den Seitenwänden oder in einem mittleren Bereich des Fahrzeugaufbaus absinken kann. Dies hat insbesondere den Vorteil, dass bei einer vollständigen Beladung des Fahrzeugaufbaus der Laderaum und somit das Ladegut gleichmäßig temperiert wird.

Weiter vorzugsweise begrenzt das Führungsmittel den Luftkanal über die gesamte Länge quer zur Längsrichtung der Ausnehmung. Dies hat den Vorteil, dass eine Strömungsgeschwindigkeit der Luft im Luftkanal annähernd konstant bleibt und somit ein optimal regelbarer Luftkreislauf einstellbar ist. Das Ladegut kann somit vorteilhaft gezielter temperiert werden.

Bei einer Ausführungsform weist der Luftkanal wenigstens einen Eintrittsbereich und wenigstens einen Austrittsbereich auf, die jeweils als Durchgangsöffnung ausgebildet sind und durch die der Luftkanal mit einem Laderaum und/oder wenigstens einem weiteren Luftkanal und/oder einem Aggregat, insbesondere einem Verdampfer, fluidverbindbar oder fluidverbunden ist. Der Luftkanal kann im Eintrittsbereich und/oder im Austrittsbereich zur Luftführung zumindest teilweise gekrümmt sein. Der Eintrittsbereich und/oder der Austrittsbereich können derart ausgebildet sein, dass diese im Betrieb eine Luftströmung umlenken.

Ist das Isolierpaneel in einem Kühlfahrzeugaufbau verbaut, kann der Luftkanal des Isolierpaneels durch den Eintrittsbereich mit einem Kühlaggregat, insbesondere einem Verdampfer, fluidverbunden sein. Die gekühlte Luft kann vom Kühlaggregat aus durch den Luftkanal in den Laderaum geführt werden. Dabei ist denkbar, dass zwischen dem Kühlaggregat und dem Luftkanal wenigstens ein weiterer Kanal zur Luftführung vorgesehen ist. Das Kühlaggregat kann auch durch einen flexiblen Schlauch mit dem Kühlaggregat fluidverbunden sein. Es ist auch denkbar, dass das Kühlaggregat mit dem Luftkanal direkt fluidverbunden ist.

Bei einer bevorzugten Ausführungsform weist die Ausnehmung einen Boden und wenigstens zwei Seitenwände auf, die zum Boden hin die Ausnehmung verjüngen. Mit anderen Worten kann die Ausnehmung mit wenigstens einer Formschräge ausgebildet sein. Dies hat den Vorteil, dass der Luftkanal bzw. die Ausnehmung vereinfacht herstellbar ist, da der Kanal lediglich Ecken mit stumpfen Winkeln aufweist.

Bei einer weiteren bevorzugten Ausführungsform weist die Deckschicht in der Ausnehmung und außerhalb der Ausnehmung eine einheitliche Schichtdicke auf. Dies hat den Vorteil, dass bei einer Herstellung das faserverstärkte Kunststoffmaterial gleichmäßig auf die Kernschicht aufgebracht werden kann, wodurch das Verfahren zur Herstellung vereinfacht wird.

Im Rahmen der Erfindung wird eine Komponente eines Fahrzeugaufbaus, insbesondere Kühlfahrzeugaufbaus offenbart und beansprucht, die wenigstens ein erfindungsgemäßes Isolierpaneel aufweist. Besonders bevorzugt ist die gesamte Komponente aus einem oder mehreren erfindungsgemäßen Isolierpaneelen zusammengesetzt. Als Komponente kommen beispielsweise eine Seitenwand, d. h. die in Fahrtrichtung des Fahrzeugaufbaus sich erstreckende Längswand, und/oder eine Vorderwand und/oder eine Decke und/oder einen Boden und/oder eine oder beide Hecktüren des Fahrzeugaufbaus infrage. Die Komponenten des Fahrzeugaufbaus bilden sofern Außenteile des Fahrzeugaufbaus, als diese den Laderaum von der Umgebung wärmedämmend isolieren.

Ein nebengeordneter Aspekt der Erfindung betrifft einen Fahrzeugaufbau, insbesondere Kühlfahrzeugaufbau, mit wenigstens einem erfindungsgemäßen Isolierpaneel. Es ist möglich, dass der Fahrzeugaufbau teilweise oder vollständig aus erfindungsgemäßen Isolierpaneelen aufgebaut ist. Vorzugsweise ist eine Decke und/oder eine Vorderwand des Fahrzeugaufbaus durch wenigstens ein erfindungsgemäßes Isolierpaneel gebildet. Zusätzlich oder alternativ können auch eine oder beide Seitenwände des Fahrzeugaufbaus durch das erfindungsgemäße Isolierpaneel gebildet sein.

Bei einer bevorzugten Ausführungsform des Fahrzeugaufbaus sind wenigstens ein Hauptverdampfer und/oder wenigstens ein Zusatzverdampfer zur Temperierung eines Laderaums vorgesehen. Der Hauptverdampfer kann im vorderen Bereich, insbesondere an der Vorderwand, des Fahrzeugaufbaus angeordnet sein. Der Zusatzverdampfer kann in einem Mittelbereich des Isolierpaneels bspw. auf annähernd halber Länge des Isolierpaneels angeordnet sein. Durch die Kombination eines Hauptverdampfers mit einem Zusatzverdampfer wird eine gleichmäßige Temperierung des Laderaums weiter verbessert. Es ist denkbar, dass der Laderaum zur Erhöhung der Flexibilität in unterschiedliche Temperaturzonen bzw. Klimakammern aufgeteilt ist. In diesem Fall kann der Hauptverdampfer zur Einstellung einer ersten Temperatur bspw. wenigstens einer ersten Klimakammer zugeordnet sein und der Zusatzverdampfer zur Einstellung einer zweiten Temperatur bspw. wenigstens einer zweiten Klimakammer zugeordnet sein. Es ist aber auch denkbar, dass bei besonders großen, insbesondere langen, Fahrzeugaufbauten durch die Zusammenschaltung beider Verdampfer eine gleichmäßige Klimatisierung des großen Laderaums verbessert möglich ist.

Ein weiterer nebengeordneter Aspekt der Erfindung betrifft ein Fahrzeug mit wenigstens einem erfindungsgemäßen Isolierpaneel. Bei dem Fahrzeug kann es sich beispielsweise um ein Kühlfahrzeug, insbesondere einen Sattelauflieger, der als Kühlfahrzeug (Kühlauflieger) ausgebildet ist, handeln.

Bei einem erfindungsgemäßen Verfahren zur Herstellung eines Isolierpaneels wird in einem ersten Schritt eine Kernschicht aus wenigstens einem wärmedämmenden, insbesondere geschäumten, Material bereitgestellt, wobei die Kernschicht auf einer Innenseite wenigstens eine Ausnehmung aufweist. Die Ausnehmung erstreckt sich in Längsrichtung des Isolierpaneels. In einem zweiten Schritt wird eine Presse und/oder die Kernschicht und die Ausnehmung mit einem faserverstärkten, insbesondere glasfaserverstärkten, Kunststoffmaterial zur Bildung wenigstens einer Deckschicht besprüht. In einem dritten Schritt erfolgt anschließend ein Verpressen der Kernschicht mit der Deckschicht, wobei die Ausnehmung mit dem faserverstärkten Kunststoffmaterial bedeckt wird.

Bei einer bevorzugten Ausführungsform des erfindungsgemäßen Verfahrens wird beim Verpressen im Bereich der Ausnehmung eine einheitliche Schichtdicke der Deckschicht ausgebildet.

Zu den Vorteilen der Komponente, des Fahrzeugaufbaus, des Fahrzeugs und des Verfahrens zur Herstellung eines erfindungsgemäßen Isolierpaneels wird auf die im Zusammenhang mit dem Isolierpaneel erläuterten Vorteile verwiesen. Darüber hinaus können die Komponente, der Fahrzeugaufbau, das Fahrzeug und das Verfahren alternativ oder zusätzlich einzelne oder eine Kombination mehrerer zuvor in Bezug auf das Isolierpaneel genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Isolierpaneel ausgestaltet sein kann.

In diesen zeigen
- Fig. 1: eine Prinzipdarstellung eines Isolierpaneels nach einem bevorzugten erfindungsgemäßen Ausführungsbeispiel; und
- Fig. 2: einen Querschnitt durch einen Luftkanal des Isolierpaneels gemäß Fig. 1.

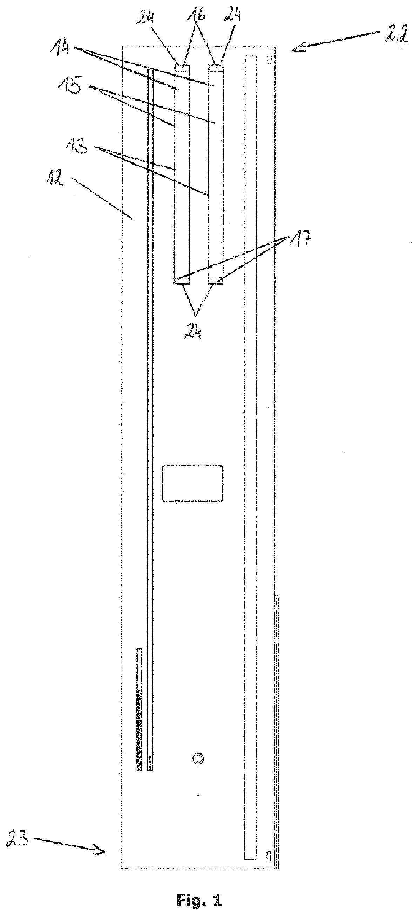

In Fig. 1 ist eine Prinzipdarstellung eines Isolierpaneels für einen Fahrzeugaufbau, insbesondere Kühlfahrzeugaufbau, gezeigt. Konkret zeigt Fig. 1 das Isolierpaneel als Deckenpaneel eines Fahrzeugaufbaus. Das Isolierpaneel kann auch als Vorderwand und/oder Seitenwand eines Fahrzeugaufbaus zum Einsatz kommen.

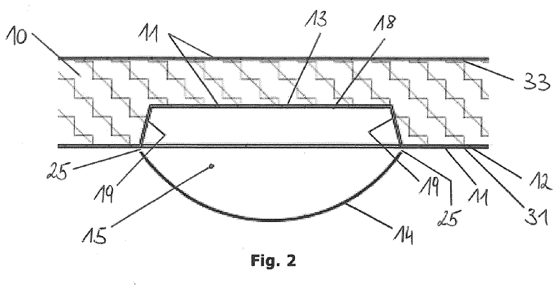

Wie in Fig. 2 gezeigt ist, umfasst das Isolierpaneel eine wärmedämmende Kernschicht 10 und eine Deckschicht 11 aus einem faserverstärkten Kunststoffmaterial. Die Kernschicht 10 ist durch ein Schaumstoffmaterial gebildet. Hierfür sind übliche wärmedämmende Schaumstoffmaterialien geeignet. Die Kernschicht 10 ist durch die Deckschicht 11 ummantelt. Die Deckschicht 11 kann einseitig, doppelseitig bzw. auf mehreren Seiten der Kernschicht 10 ausgebildet sein. Die Deckschicht 11 kann die Kernschicht 10 vollständig ummanteln bzw. einkapseln. Auf die Deckschicht 11 wird später näher eingegangen.

Die Kernschicht 10 kann aus zusammengesetzten Kernschichtelementen, insbesondere geschäumten Kernschichtblöcken, gebildet sein. Mit anderen Worten kann die Kernschicht 10 mehrteilig ausgebildet sein. Alternativ kann die Kernschicht 10 einstückig, insbesondere einteilig, ausgebildet sein. Mit anderen Worten kann die Kernschicht 10 durch ein einziges Kernschichtelement gebildet sein. Die Kernschicht kann gemäß einem Baukastenprinzip (Puzzle) aus den einzelnen Kernschichtelementen zusammengesetzt sein. Dadurch kann vorteilhaft das Isolierpaneel in jeder Größe anforderungsspezifisch bzw. individuell hergestellt werden.

Die Kernschicht 10 weist eine Innenseite 12 und eine Außenseite 33 auf. Die Innenseite 12 ist in Einbaulage des Isolierpaneels einem Laderaum eines Fahrzeugaufbaus zugewandt. Die Außenseite 33 der Kernschicht 10 ist der Innenseite 12 gegenüber angeordnet. Die Außenseite 33 ist in Einbaulage des Isolierpaneels dem Laderaum des Fahrzeugaufbaus abgewandt vorgesehen. Wie in Fig. 1 ersichtlich, sind auf der Innenseite 12 des Isolierpaneels mehrere Kanäle 15 sowie mehrere Ausnehmungen 13 vorgesehen. Auf die Ausnehmungen 13 wird später näher eingegangen.

Konkret umfasst das Isolierpaneel zwei Luftkanäle 15. Die Anzahl der Kanäle 15 ist nicht auf die vorstehend genannte Anzahl eingeschränkt. Das Isolierpaneel kann auch mehrere, insbesondere mehr als zwei, Luftkanäle 15 aufweisen. Es ist auch denkbar, dass das Isolierpaneel lediglich einen Luftkanal 15 aufweist. Die Luftkanäle 15 dienen zur Luftführung in einem Laderaum eines Fahrzeugaufbaus, insbesondere eines Kühlfahrzeugaufbaus.

Die Luftkanäle 15 erstrecken sich in Längsrichtung des Isolierpaneels. Die Luftkanäle 15 erstrecken sich, wie in Fig. 1 gezeigt, teilweise in Längsrichtung des Isolierpaneels. Die Luftkanäle 15 sind hierbei lediglich der besseren Darstellung halber verkürzt dargestellt. Die Luftkanäle 15 können sich in Längsrichtung des Isolierpaneels erstrecken, sodass diese zur Luftführung einen vorderen Bereich 22 mit einem hinteren Bereich 23 des Isolierpaneels verbinden. Mit anderen Worten können sich die Luftkanäle 15 im Wesentlichen über die gesamte Länge des Isolierpaneels erstrecken. In Einbaulage ist der vordere Bereich 22 des Isolierpaneels einer Vorderwand des Fahrzeugaufbaus zugeordnet und der hintere Bereich 23 des Isolierpaneels bspw. einem Heckportal.

Im Folgenden werden die Luftkanäle 15 am Beispiel eines der beiden Luftkanäle 15 beschrieben.

Fig. 2 zeigt einen der beiden Luftkanäle 15 im Querschnitt. Der Luftkanal 15 ist zwischen einer Ausnehmung 13 und einem Führungsmittel 14 vorgesehen. Die Ausnehmung 13 ist in der Kernschicht 10 des Isolierpaneels ausgebildet. Die Ausnehmung 13 ist mit der Deckschicht 11 formfolgend bedeckt. Mit anderen Worten ist die Deckschicht 11 an die Form der Ausnehmung 13 angepasst bzw. anliegend aufgebracht. Die Deckschicht 11 ummantelt die Ausnehmung 13 formabbildend. Es ist auch denkbar, dass die Kernschicht 10 im Bereich der Ausnehmung 13 frei von einer Deckschicht 11 vorgesehen ist. Mit anderen Worten kann die Deckschicht 11 auf die Kernschicht 10 derart aufgebracht sein, dass die Deckschicht 11 im Bereich der Ausnehmung 13 eine Schichtaussparung aufweist. Die Schichtaussparung kann dabei einer Öffnungskontur der Ausnehmung 13 entsprechen.

Generell kann die Deckschicht 11 an der gesamten Kernschicht 10 im Wesentlichen eine einheitliche Schichtdicke aufweisen. Konkret weist die Deckschicht 11 im Bereich der Ausnehmung 13 und im Bereich außerhalb der Ausnehmung 13 im Wesentlichen eine einheitliche Schichtdicke auf. Es ist auch denkbar, dass die Deckschicht 11 im Bereich der Ausnehmung 13 ein erhöhte Schichtdicke aufweist, um die Stabilität des Isolierpaneels im Bereich des Luftkanals 15 zu verbessern. Ferner ist denkbar, dass die Deckschicht 11 an weiteren nicht dargestellten Bereichen der Kernschicht 10 ein erhöhte Schichtdicke aufweist.

Die Ausnehmung 13 weist einen Boden 18 und zwei Seitenwände 19 auf, die zum Boden 18 hin die Ausnehmung 13 verjüngen. Mit anderen Worten sind die Seitenwände 19 zum Boden 18 hin schräg vorgesehen. Die Ausnehmung 13 ist im Querschnitt trapezförmig ausgebildet. Die Ausnehmung 13 umfasst des Weiteren zwei stirnseitige Wände 24, die ebenso zum Boden 18 hin die Ausnehmung 13 verjüngen können. Es ist auch denkbar, dass die Seitenwände 19 und/oder die stirnseitigen Wände 24 senkrecht vorgesehen sind. Mit anderen Worten kann die Ausnehmung 13 im Querschnitt rechteckig ausgebildet sein.

Wie vorstehend beschrieben, weist das Isolierpaneel ein Führungsmittel 14 auf, das die Ausnehmung 13 nach außen hin begrenzt. Mit anderen Worten ist der Luftkanal 15 durch die Ausnehmung 13 und das Führungsmittel 14 begrenzt. Das Führungsmittel 14 begrenzt den Luftkanal 15 über die gesamte Länge quer zur Längsrichtung der Ausnehmung 13. Zwischen dem Führungsmittel 14 und der Innenseite 12 bzw. der Deckschicht 11 ist ein Spalt 25 vorgesehen. Der Spalt 25 verläuft in Längsrichtung des Luftkanals 15. Mit anderen Worten verläuft der Spalt 25 im Wesentlichen parallel zu den Längsseiten der Ausnehmung 13. der Spalt 25 kann über die gesamte Länge des Führungsmittels 14 vorgesehen sein. Es ist auch denkbar, dass der Spalt 25 lediglich abschnittsweise vorgesehen ist. Dazu kann das Führungsmittel 14 abschnittsweise seitlich geschlitzt sein. Das Führungsmittel 14 kann somit den Luftkanal 15 quer zur Längsrichtung der Ausnehmung 13 abschnittsweise oder vollständig fluiddicht abdichten.

Der Spalt 25 ist auf beiden Seiten der Führungsmittels 14 vorgesehen. Durch den Spalt 25 ist der Luftkanal 15 seitlich nach außen offen. Dadurch kann die Luft im Betrieb aus dem Luftkanal 15 seitlich durch den Spalt 25 austreten und beispielsweise an den Seitenwänden eines Fahrzeugaufbaus absinken. Es wird somit eine verbesserte Luftzirkulation im Laderaum bzw. Klimatisierung des Laderaums erreicht. Ferner kann das Führungsmittel 14 abschnittsweise oder über die gesamte Länge verteilt Durchgangsöffnungen aufweisen, durch die der Luftkanal 15 nach außen hin offen ist. Die Durchgangsöffnungen können kreisförmig oder durch Schlitze ausgebildet sein.

Wie in Fig. 1 gut erkennbar, sind ein Eintrittsbereich 16 und ein Austrittsbereich 17 des Luftkanals 15 nach außen hin offen. Mit anderen Worten ist der Eintrittsbereich 16 und der Austrittsbereich 17 in Einbaulage des Isolierpaneels zum Laderaum hin offen. Der Luftkanal 15 ist im Eintrittsbereich 16 und im Austrittsbereich 17 durch das Führungsmittel 14 nicht überdeckt bzw. begrenzt. Der Eintrittsbereich 16 und der Austrittsbereich 17 sind jeweils durch eine Durchgangsöffnung gebildet. Im eingebauten Zustand des Isolierpaneels verbindet der Austrittsbereich 17 den Luftkanal 15 bspw. mit dem Laderaum des Fahrzeugaufbaus. Ferner kann der Eintrittsbereich 16 beispielsweise mit einem nicht dargestellten Kühlaggregat direkt oder indirekt fluidverbunden sein.

Gemäß Fig. 2 ist das Führungsmittel 14 aus einem flexiblen Textilmaterial gebildet. Das Führungsmittel 14 kann durch ein Tuch, insbesondere ein Segeltuch, oder eine Plane gebildet sein. Das Führungsmittel 14 kann an der Ausnehmung 13 demontierbar bzw. austauschbar vorgesehen sein. Das Führungsmittel 14 kann an der Kernschicht 10 festmontiert sein. Das Führungsmittel 14 kann aufgehängt vorgesehen sein. Dazu kann das Führungsmittel 14 bspw. über Seile an der Kernschicht 10 befestigt sein.

Es ist denkbar, dass das Führungsmittel 14 durch ein plattenförmiges Element gebildet ist. Das Führungsmittel 14 kann die Ausnehmung 13 zwischen dem Eintrittsbereich 16 und dem Austrittsbereich 17 derart begrenzen, dass das Führungsmittel 14 mit einer Oberfläche der Deckschicht 11 fluchtet. Mit anderen Worten kann das Führungsmittel 14 mit einer Außenfläche 31 der Deckschicht 11 eine plane Fläche bilden. In einer weiteren Variante kann der Luftkanal 15 durch die Kernschicht 10 zwischen dem Eintrittsbereich 16 und dem Austrittsbereich 17 nach außen begrenzt sein. Bei dieser Variante ist das Führungselement 14 mit der Kernschicht 10 integral ausgebildet.

Gemäß Fig. 2 weisen die Ausnehmungen 13 im Querschnitt eine Trapezform auf. Die Ausnehmungen 13 können im Querschnitt auch eine Rechteckform aufweisen. Die Ausnehmungen 13sind nicht auf die genannten Formen beschränkt.

Das in Fig. 1 gezeigte Isolierpaneele wird gemäß einem erfindungsgemäßen Herstellungsverfahren wie folgt hergestellt.

In einem ersten Schritt wird eine Kernschicht 10 aus wenigstens einem wärmedämmenden, insbesondere geschäumten, Material bereitgestellt. Die Kernschicht 10 umfasst dabei zumindest eine der Ausnehmungen 13, wie vorstehend beschrieben.

Bei einer ersten Variante des Herstellungsverfahrens erfolgt in einem zweiten Schritt ein Besprühen der Kernschicht 10 mit der oder den Ausnehmungen 13mit dem faserverstärkten, insbesondere glasfaserverstärkten, Kunststoffmaterial zur Bildung der Deckschichten 11. Das faserverstärkte Kunststoffmaterial wird auf die Innenseite 12 und die Außenseite 33 der Kernschicht 10 aufgesprüht derart, dass die Deckschichten 11 auf der Kernschicht 10 ausgebildet werden. Das Besprühen der Innenseite 12 und der Außenseite 33 kann im Wesentlichen zeitgleich erfolgen.

In einem dritten Schritt wird die Kernschicht 10 mit den Deckschichten 11 verpresst. Dabei wird die Ausnehmung 13 mit dem faserverstärkten Kunststoffmaterial teilweise ausgefüllt und die Deckschicht 11 an der Ausnehmung 13 formfolgend ausgebildet. Die einzelnen Deckschichten 11 werden im Wesentlichen gleichzeitig mit der Kernschicht 10 verpresst.

Bei einer zweiten, insbesondere alternativen, Variante des Herstellungsverfahrens erfolgt nach dem Bereitstellen der Kernschicht 10 das Besprühen der Innenseite 12 und der Außenseite 33 der Kernschicht 10 nacheinander. Beispielsweise wird nach dem Bereitstellen die Außenseite 33 der Kernschicht 10 mit dem faserverstärkten Kunststoffmaterial zur Bildung einer ersten Deckschicht 11 besprüht und anschließend mit der Kernschicht 10 verpresst. Anschließend bzw. danach wird die Innenseite 12 der Kernschicht 10 mit dem faserverstärkten Kunststoffmaterial zur Bildung einer zweiten Deckschicht 11 besprüht und anschließend mit der Kernschicht 10 verpresst. Das Besprühen und Verpressen ist der Innenseite 12 bzw. der Außenseite 33 der Kernschicht 10 ist nicht auf die vorstehende Reihenfolge eingeschränkt. Mit anderen Worten kann die Innenseite 12 vor der Außenseite 33 der Kernschicht 10 besprüht und verpresst werden.

Bei einer dritten, insbesondere bevorzugten, Variante des Herstellungsverfahrens wird vor oder nach dem Bereitstellen der Kernschicht 10 eine erste Gegenseite, insbesondere eine unten angeordnete Gegenseite, einer Presse mit einem Trennmittel besprüht wird. Danach wird die erste Gegenseite der Presse mit dem faserverstärkten Kunststoffmaterial zur Bildung einer ersten Deckschicht 11 besprüht. Anschließend wird die Kernschicht 10 bzw. werden die Kernschichtelemente 14 der Kernschicht 10 mit einer ersten Seite, insbesondere der Innenseite 12 oder der Außenseite 33, auf das aufgesprühte faserverstärkte Kunststoffmaterial der ersten Gegenseite der Presse aufgelegt.

In einem weiteren Schritt wird eine zweite Seite, insbesondere die Innenseite 12 oder Außenseite 33, der aufgelegten Kernschicht 10 mit dem faserverstärkten Kunststoffmaterial zur Bildung einer zweiten Deckschicht 11 besprüht. Ferner wird eine zweite Gegenseite, insbesondere eine oben angeordnete Gegenseite, der Presse mit einem Trennmittel besprüht. Das Besprühen der zweiten Gegenseite mit dem Trennmittel kann zeitlich unabhängig von den anderen genannten Verfahrensschritten erfolgen.

Anschließend wird die Kernschicht 10 durch die Presse mit den Deckschichten 11 verpresst. Dabei wird die Ausnehmung 13 mit dem faserverstärkten Kunststoffmaterial teilweise ausgefüllt und die Deckschicht 11 an der Ausnehmung 13 formfolgend ausgebildet. Beim Verpressen wird im Wesentlichen eine einheitliche Schichtdicke der Deckschicht 10, insbesondere im Bereich der Ausnehmung 13 ausgebildet.

### Bezugszeichenliste

- 10: Kernschicht
- 11: Deckschicht
- 12: Innenseite
- 13: Ausnehmung
- 14: Führungsmittel
- 15: Luftkanal
- 16: Eintrittsbereich
- 17: Austrittsbereich
- 18: Boden
- 19: Seitenwand
- 22: vorderer Bereich
- 23: hinterer Bereich
- 24: Stirnseiten
- 25: Spalt
- 31: Außenfläche der Deckschicht
- 33: Außenseite der Kernschicht

## Patentansprüche

1. Isolierpaneel für einen Fahrzeugaufbau, insbesondere einen Kühlfahrzeugaufbau, mit wenigstens einer wärmedämmenden Kernschicht (10) und wenigstens einer Deckschicht (11) aus faserverstärktem Kunststoffmaterial,
**dadurch gekennzeichnet, dass**
die Kernschicht (10) auf einer Innenseite (12) wenigstens eine Ausnehmung (13) aufweist, die sich in Längsrichtung des Isolierpaneels erstreckt und durch ein Führungsmittel (14) nach außen hin zumindest teilweise begrenzt ist, wobei die Ausnehmung (13) und das Führungsmittel (14) einen Luftkanal (15) zur Luftführung in einem Laderaum bilden.

2. Isolierpaneel nach Anspruch 1,
**dadurch gekennzeichnet, dass**
die Ausnehmung (13) mit der Deckschicht (11) formfolgend bedeckt ist, wobei der Luftkanal (15) zwischen der Deckschicht (11) und dem Führungsmittel (14) ausgebildet ist.

3. Isolierpaneel nach Anspruch 1 oder 2,
**dadurch gekennzeichnet, dass**
die Ausnehmung (13) annähernd über die gesamte Länge des Isolierpaneels vorgesehen ist.

4. Isolierpaneel nach einem der vorhergehenden Ansprüche,
**dadurch gekennzeichnet, dass**
das Führungsmittel (14) aus einem flexiblen Textilmaterial, insbesondere einem Tuch oder einer Plane, gebildet ist.

5. Isolierpaneel nach einem der vorhergehenden Ansprüche,
d**adurch gekennzeichnet**, dass
das Führungsmittel (14) wenigstens eine Öffnung zur Luftverteilung im Laderaum aufweist.

6. Isolierpaneel nach einem der vorhergehenden Ansprüche,
**dadurch gekennzeichnet, dass**
das Führungsmittel (14) den Luftkanal (15) quer zur Längsrichtung der Ausnehmung (13) zumindest abschnittsweise fluiddicht abdichtet.

7. Isolierpaneel nach einem der vorhergehenden Ansprüche,
**dadurch gekennzeichnet, dass**
das Führungsmittel (14) den Luftkanal (15) über die gesamte Länge quer zur Längsrichtung der Ausnehmung (13) begrenzt.

8. Isolierpaneel nach einem der vorhergehenden Ansprüche,
**dadurch gekennzeichnet, dass**
der Luftkanal (15) wenigstens einen Eintrittsbereich (16) und wenigstens einen Austrittsbereich (17) aufweist, die jeweils als Durchgangsöffnung ausgebildet sind und durch die der Luftkanal (15) mit einem Laderaum und/oder wenigstens einem weiteren Luftkanal und/oder einem Aggregat, insbesondere einem Verdampfer, fluidverbindbar oder fluidverbunden ist.

9. Isolierpaneel nach einem der vorhergehenden Ansprüche,
**dadurch gekennzeichnet, dass**
die Ausnehmung (13) einen Boden (18) und wenigstens zwei Seitenwände (19) aufweist, die zum Boden (18) hin die Ausnehmung (13) verjüngen.

10. Isolierpaneel nach einem der vorhergehenden Ansprüche,
**dadurch gekennzeichnet, dass**
die Deckschicht (11) in der Ausnehmung (13) und außerhalb der Ausnehmung (13) eine einheitliche Schichtdicke aufweist.

11. Komponente eines Fahrzeugaufbaus, insbesondere Kühlfahrzeugaufbaus, umfassend eine Seitenwand und/oder eine Vorderwand und/oder eine Decke und/oder einen Boden jeweils mit wenigstens einem Isolierpaneel nach Anspruch 1.

12. Fahrzeugaufbau, insbesondere Kühlfahrzeugaufbau, mit wenigstens einem Isolierpaneel nach Anspruch 1.

13. Fahrzeugaufbau nach Anspruch 12,
**dadurch gekennzeichnet, dass**
wenigstens ein Hauptverdampfer und/oder wenigstens ein Zusatzverdampfer zur Temperierung eines Laderaums vorgesehen sind.

14. Fahrzeug, insbesondere Kühlfahrzeug mit wenigstens einem Isolierpaneel nach Anspruch 1.

15. Verfahren zur Herstellung eines Isolierpaneels nach einem der Ansprüche 1 bis 10, mit den folgenden Schritten:
- Bereitstellen einer Kernschicht (10) aus wenigstens einem wärmedämmenden, insbesondere geschäumten, Material, wobei die Kernschicht (10) auf einer Innenseite (12) wenigstens eine Ausnehmung (13) aufweist, die sich in Längsrichtung des Isolierpaneels erstreckt;
- Besprühen einer Presse und/oder der Kernschicht (10) und der länglichen Ausnehmung (13) mit einem faserverstärkten, insbesondere glasfaserverstärkten, Kunststoffmaterial zur Bildung wenigstens einer Deckschicht (11); und
- Verpressen der Kernschicht (10) mit der Deckschicht (11), wobei die Ausnehmung (13) mit dem faserverstärkten Kunststoffmaterial bedeckt wird.

16. Verfahren nach Anspruch 15,
**dadurch gekennzeichnet, dass**
beim Verpressen im Bereich der Ausnehmung (13) eine einheitliche Schichtdicke der Deckschicht (11) ausgebildet wird.

## Claims

1. An insulating panel for a vehicle body, in particular a refrigerated vehicle body, having at least one thermally insulating core layer (10) and at least one covering layer (11) consisting of fibre-reinforced plastic material,
**characterised in that**
the core layer (10) has at least one recess (13) on an inner side (12), said recess extending in the longitudinal direction of the insulating panel and being at least partially delimited to the outside by a guiding means (14), wherein the recess (13) and the guiding means (14) form an air duct (15) for guiding air within a load space.

2. The insulating panel according to Claim 1,
**characterised in that**
the recess (13) is covered with the covering layer (11) in a shape-following manner, wherein the air duct (15) is formed between the covering layer (11) and the guiding means (14).

3. The insulating panel according to Claim 1 or 2,
**characterised in that**
the recess (13) is provided approximately over the entire length of the insulating panel.

4. The insulating panel according to one of the preceding claims,
**characterised in that**
the guiding means (14) is formed from a flexible textile material, in particular a cloth or tarpaulin.

5. The insulating panel according to one of the preceding claims,
**characterised in that**
the guiding means (14) has at least one opening for air distribution within the load space.

6. The insulating panel according to one of the preceding claims,
**characterised in that**
the guiding means (14) seals off the air duct (15) fluid-tightly at least in some sections transversely to the longitudinal direction of the recess (13).

7. The insulating panel according to one of the preceding claims,
**characterised in that**
the guiding means (14) delimits the air duct (15) over the entire length transversely to the longitudinal direction of the recess (13).

8. The insulating panel according to one of the preceding claims,
**characterised in that**
the air duct (15) has at least one inlet region (16) and at least one outlet region (17), which are each formed as through-openings and through which the air duct (15) can be fluid-connected or is fluid-connected to a load space and/or at least one further air duct and/or a unit, in particular an evaporator.

9. The insulating panel according to one of the preceding claims,
**characterised in that**
the recess (13) has a bottom (18) and at least two side walls (19) which taper the recess (13) towards the bottom (18).

10. The insulating panel according to one of the preceding claims,
**characterised in that**
the covering layer (11) has a uniform layer thickness in the recess (13) and outside the recess (13).

11. A component of a vehicle body, in particular of a refrigerated vehicle body, comprising a side wall and/or a front wall and/or a ceiling and/or a floor each having at least one insulating panel according to Claim 1.

12. A vehicle body, in particular a refrigerated vehicle body, having at least one insulating panel according to Claim 1.

13. The vehicle body according to Claim 12,
**characterised in that**
at least one main evaporator and/or at least one additional evaporator are provided to control the temperature of a load space.

14. A vehicle, in particular a refrigerated vehicle having at least one insulating panel according to Claim 1.

15. A method for producing an insulating panel according to one of Claims 1 to 10, comprising the following steps:
- providing a core layer (10) of at least one thermally insulating, in particular foamed, material, wherein the core layer (10) has on an inner side (12) at least one recess (13) which extends in the longitudinal direction of the insulating panel;
- spraying a press and/or the core layer (10) and the elongate recess (13) with a fibre-reinforced, in particular glass-fibre-reinforced, plastic material to form at least one covering layer (11); and
- pressing the core layer (10) with the covering layer (11), wherein the recess (13) is covered with the fibre-reinforced plastic material.

16. The method according to Claim 15,
**characterised in that**
a uniform layer thickness of the covering layer (11) is formed in the region of the recess (13) during pressing.

## Revendications

1. Panneau isolant pour une carrosserie de véhicule, notamment une carrosserie d'un véhicule frigorifique, pourvu d'au moins une couche d'âme (10) isolante thermique et d'au moins une couche de couverture (11) en matière plastique renforcée par fibres,
**caractérisé en ce que**
sur une face intérieure (12), la couche d'âme (10) comporte au moins un évidement (13) qui s'étend dans la direction longitudinale du panneau isolant et qui est au moins partiellement délimité vers l'extérieur par un moyen de guidage (14), l'évidement (13) et le moyen de guidage (14) formant un canal d'air (15) destiné à guider l'air dans un espace de chargement.

2. Panneau isolant selon la revendication 1,
**caractérisé en ce que**
l'évidement (13) est recouvert en suivant sa forme par la couche de couverture (11), le canal d'air (15) étant conçu entre la couche de couverture (11) et le moyen de guidage (14).

3. Panneau isolant selon la revendication 1 ou 2,
**caractérisé en ce que**
l'évidement (13) est prévu sur pratiquement la longueur totale du panneau isolant.

4. Panneau isolant selon l'une quelconque des revendications précédentes,
**caractérisé en ce que**
le moyen de guidage (14) est conçu en une matière textile souple, notamment en une toile ou une bâche.

5. Panneau isolant selon l'une quelconque des revendications précédentes,
**caractérisé en ce que**
le moyen de guidage (14) comporte au moins un orifice destiné à distribuer l'air dans l'espace de chargement.

6. Panneau isolant selon l'une quelconque des revendications précédentes,
**caractérisé en ce que**
le moyen de guidage (14) assure l'étanchéité au fluide au moins par endroits du canal d'air (15), à la transversale de la direction longitudinale de l'évidement (13).

7. Panneau isolant selon l'une quelconque des revendications précédentes,
**caractérisé en ce que**
le moyen de guidage (14) délimite le canal d'air (15) sur toute la longueur, à la transversale de la direction longitudinale de l'évidement (13).

8. Panneau isolant selon l'une quelconque des revendications précédentes,
**caractérisé en ce que**
le canal d'air (15) comporte au moins une zone d'entrée (16) et au moins une zone de sortie (17), qui sont conçues chacune sous la forme d'un orifice de passage et par lesquelles le canal d'air (15) est susceptible d'être mis en liaison fluidique ou est en liaison fluidique avec l'espace de chargement et / ou avec au moins un autre canal d'air et / ou avec un agrégat, notamment un évaporateur.

9. Panneau isolant selon l'une quelconque des revendications précédentes,
**caractérisé en ce que**
l'évidement (13) comporte un fond (18) et au moins deux parois latérales (19), qui en direction du fond (18) rétrécissent l'évidement (13).

10. Panneau isolant selon l'une quelconque des revendications précédentes,
**caractérisé en ce que**
la couche de couverture (11) présente dans l'évidement (13) et à l'extérieur de l'évidement (13) une épaisseur de couche homogène.

11. Composant d'une carrosserie de véhicule, notamment d'une carrosserie de véhicule frigorifique, comportant une paroi latérale et / ou une paroi avant et / ou un plafond et / ou un plancher, pourvus respectivement d'au moins un panneau isolant selon la revendication 1.

12. Carrosserie de véhicule, notamment carrosserie d'un véhicule frigorifique, pourvu d'au moins un panneau isolant selon la revendication 1.

13. Carrosserie de véhicule selon la revendication 12,
**caractérisé en ce**
**qu'**il est prévu au moins un évaporateur principal et / ou au moins un évaporateur auxiliaire, destinés à tempérer un espace de chargement.

14. Véhicule, notamment véhicule frigorifique, pourvu d'au moins un panneau isolant selon la revendication 1.

15. Procédé, destiné à fabriquer un panneau isolant selon l'une quelconque des revendications 1 à 10, avec les étapes suivantes, consistant à :
- mettre à disposition une couche d'âme (10) en au moins une matière isolante thermique, notamment expansée, sur une face intérieure (12), la couche d'âme (10) comportant au moins un évidement (13) qui s'étend dans la direction longitudinale du panneau isolant ;
- vaporiser une presse et / ou la couche d'âme (10) et l'évidement (13) longitudinal d'une matière plastique renforcée par fibres, notamment renforcée par fibres de verre, pour créer au moins une couche de couverture (11) ; et
- compacter la couche d'âme (10) avec la couche de couverture (11), alors que l'on recouvre l'évidement (13) avec la matière plastique renforcée par fibres.

16. Procédé selon la revendication 15,
**caractérisé en ce que**
lors du compactage dans la zone de l'évidement (13), l'on créé une épaisseur de couche homogène de la couche de couverture (11).
